(19) Europäisches Patentamt
European Patent Office
Office européen des brevets

(11) **EP 3 227 755 B1**

(12) **FASCICULE DE BREVET EUROPEEN**

(45) Date de publication et mention de la délivrance du brevet:
**16.10.2019 Bulletin 2019/42**

(21) Numéro de dépôt: **15817968.9**

(22) Date de dépôt: **04.12.2015**

(51) Int Cl.:
*G05B 21/02* (2006.01)     *G01D 21/00* (2006.01)
*G06Q 10/06* (2012.01)     *G06Q 50/04* (2012.01)

(86) Numéro de dépôt international:
**PCT/FR2015/053326**

(87) Numéro de publication internationale:
**WO 2016/087798 (09.06.2016 Gazette 2016/23)**

(54) **PROCÉDÉ DE FABRICATION DE PIÈCES BASÉ SUR L'ANALYSE SIMULTANÉE D'INDICATEURS STATISTIQUES**

VERFAHREN ZUR HERSTELLUNG VON TEILEN BASIEREND AUF DER GLEICHZEITIGEN ANALYSE VON STATISTISCHEN INDIKATOREN

A PROCESS FOR MANUFACTURING PARTS THAT IS BASED ON SIMULTANEOUS ANALYSIS OF STATISTICAL INDICATORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2014 FR 1461990**

(43) Date de publication de la demande:
**11.10.2017 Bulletin 2017/41**

(73) Titulaire: **SAFRAN AIRCRAFT ENGINES**
**75015 Paris (FR)**

(72) Inventeurs:
• **FERRY, Olivier**
**77550 Moissy-Cramayel (FR)**
• **CAMBEFORT, Arnaud**
**77550 Moissy-cramayel (FR)**
• **COURTIN, Pascal**
**77550 Moissy-cramayel (FR)**
• **HARDOUIN, Nicolas**
**77550 Moissy-cramayel (FR)**
• **CLERET DE LANGAVANT, Charles**
**77550 Moissy-cramayel (FR)**

(74) Mandataire: **Regimbeau**
**20, rue de Chazelles**
**75847 Paris Cedex 17 (FR)**

(56) Documents cités:
**US-A- 5 408 405     US-A- 5 655 110**

**Description**

DOMAINE DE L'INVENTION

L'invention porte sur l'utilisation d'indicateurs statistiques en milieu industriel, par exemple dans l'industrie aéronautique, en particulier pour faciliter le suivi et le contrôle de la fabrication de pièces.

ETAT DE LA TECHNIQUE

La fabrication de pièces, notamment mécaniques, en milieu industriel se heurte à deux contraintes opposées, à savoir l'augmentation des cadences et volumes de fabrication d'une part, et l'augmentation des niveaux de qualité requis d'autre part, ce qui est en particulier vrai dans le domaine aéronautique. Le document US 5 655 110 A1 donne un exemple de contrôle dans le cadre de la fabrication de pièces mécaniques.
Il est aujourd'hui difficilement envisageable d'effectuer des contrôles qualité pour la totalité des pièces fabriquées sauf à nuire considérablement à la cadence de fabrication. On utilise donc en général des indicateurs statistiques de la fabrication, permettant de déduire de manière fiable une information globale sur la qualité de l'ensemble des pièces fabriquées à partir d'information spécifiques de la qualité d'un nombre fini de pièces prélevées en tant qu'échantillon.
Outre les contrôles en fin de production qui peuvent être faits sur des échantillons ayant un nombre limité de pièces, il est généralement également effectué des contrôles en cours de production de manière à pouvoir éventuellement piloter le flux de production, c'est-à-dire ajuster les conditions de fabrication pour s'assurer que les pièces fabriquées continuent de répondre aux critères de qualités requis. Dans certains cas, ces contrôles statistiques en cours de production peuvent amener à stopper complètement la production, notamment si les pièces produites présentes des défauts de qualité trop importants et que le flux de fabrication doit être réinitialisé entièrement.
Les contrôles qualité sont faits en relation à une dimension caractéristique des pièces qui sont fabriquées. Cette dimension caractéristique peut être par exemple une cote particulière de la pièce, sa masse, ou toute autre caractéristique mesurable desdites pièces.
Pour effectuer les contrôles statistiques, on prélève successivement plusieurs échantillons, chaque échantillon comprenant plusieurs pièces du flux de fabrication, et on mesure ensuite la dimension caractéristique de chaque pièce de l'échantillon prélevé. A partir des différentes mesures de la dimension caractéristique des pièces de l'échantillon prélevé, on calcule la valeur d'un indicateur statistique préalablement choisi pour suivre la qualité du flux de fabrication.
Il existe divers indicateurs statistiques pouvant être utilisés afin de suivre l'évolution d'un flux de fabrication de pièces, chaque indicateur statistique donnant des informations différentes permettant d'ajuster les conditions de fabrication d'une manière ou d'une autre.
La plupart des indicateurs statistiques utilisés pour le suivi d'un processus industriel de fabrication sont calculés à partir d'une moyenne $\mu$ et d'un écart-type $\sigma$ de la dimension caractéristique mesurée sur plusieurs pièces. Plus précisément, $\mu$ correspond à la moyenne du décentrage mesuré pour la dimension caractéristique par rapport à la valeur de référence pour cette dimension caractéristique.
On peut par exemple citer le coefficient de centrage, noté Cc, qui représente un bridage imposé aux variations de la moyenne $\mu$ à l'intérieur de l'intervalle de tolérance IT. L'intervalle de tolérance IT est l'écart entre les valeurs extrêmes admissibles de la dimension caractéristique, étant donc calculé comme la différence entre la tolérance supérieure TS et la tolérance inférieure TI de la dimension caractéristique mesurée, soit IT = TS - TI. Le coefficient de centrage Cc est généralement défini par la formule :

$$Cc = \frac{\mu}{(TS-TI)/2}$$

Le processus de fabrication peut aussi être piloté en étudiant des indices de capabilité qui caractérisent la performance réelle du procédé par rapport à la performance souhaitée. De tels indices permettent en effet de mesurer la capacité du processus de fabrication à réaliser des pièces dont les dimensions caractéristiques sont comprises dans l'intervalle de tolérance IT souhaité.
On peut par exemple se référer à l'indice de capabilité procédé Cp qui représente l'aptitude d'un procédé de fabrication de produire des pièces de manière précise et répétable. Plus l'indice de capabilité Cp est grand et plus les pièces fabriquées vont se ressembler, tandis que si l'indice de capabilité Cp est faible, la production sera dispersée. L'indice de capabilité procédé Cp est défini généralement par la formule :

$$Cp = \frac{(TS - TI)/2}{3\sigma}$$

L'inconvénient d'un tel indice de capabilité procédé Cp est qu'un résultat positif (c'est-à-dire élevé) peut aussi correspondre à une production en dehors des limites de la tolérance. En effet, la conformité industrielle d'un flux de fabrication dépend de l'étendue, c'est-à-dire non seulement de sa dispersion mais aussi de la position de sa moyenne par rapport à l'intervalle de tolérance IT. Un autre indice de capabilité utilisé est donc l'indice de capabilité Cpk qui représente la dispersion mais également le centrage de la production par rapport aux limites de la tolérance. Dans ce cas, lorsque l'indice de capabilité Cpk est élevé, cela signifie que la production est répétable et qu'elle est en outre bien centrée dans l'intervalle de tolérance IT, c'est-à-dire qu'il y aura moins de risque que des pièces soient fabriquées en dehors des tolérances. L'indice de capabilité Cpk est défini généralement par la formule :

$$Cpk = \frac{Min(TS - \mu\,;\mu - TI)}{3\sigma}$$

Il existe bien entendu d'autres indicateurs statistiques ayant des propriétés spécifiques, et pouvant être utilisés en fonction des besoins de pilotage du processus de fabrication.

L'une des façons pratiques de suivre ces indicateurs statistiques est d'utiliser des cartes de contrôle qui se présentent généralement sous la forme de graphiques représentant le temps sur l'axe des abscisses et le critère statistique mesuré sur l'axe des ordonnées. Sur ce graphique sont en outre également affichées différentes zones, d'apparence différente, chaque zone correspondant au résultat fonction de la valeur de l'indicateur statistique mesuré. On peut par exemple avoir des zones de couleurs différentes, chaque couleur correspondant à un résultat particulier.

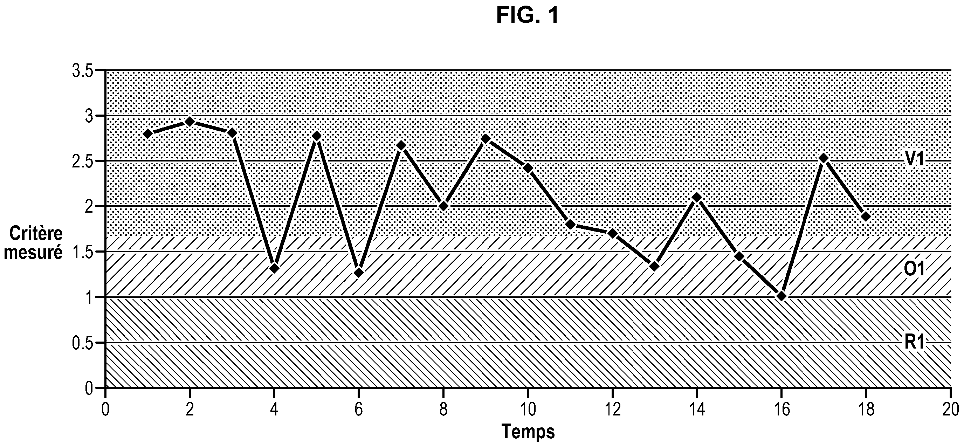

La figure 1 représente un exemple d'une telle carte de contrôle graphique. La zone V1 correspondant par exemple à une zone de validation, c'est-à-dire que si l'indicateur statistique mesuré est dans cette zone, le processus de fabrication est validé et le flux de fabrication peut être poursuivi le cas échéant. La zone R1 correspond quant à elle à une zone de sanction, c'est-à-dire que si l'indicateur statistique mesuré se situe dans cette zone alors il y a une forte déviation par rapport aux critères de qualité requis, et il faut intervenir sur le processus de fabrication. Généralement un tel cas implique un rejet du lot de pièces fabriqué, voire un arrêt du processus de fabrication. La zone O1 correspond quant à elle à une zone intermédiaire de contrôle, qui lorsque l'indicateur statistique est dans cette zone, indique à l'utilisateur qu'il faut contrôler les paramètres du processus de fabrication, et éventuellement ajuster les conditions de fabrication de sorte à corriger les écarts constatés et les recentrer vers les valeurs de référence de la dimension caractéristique.

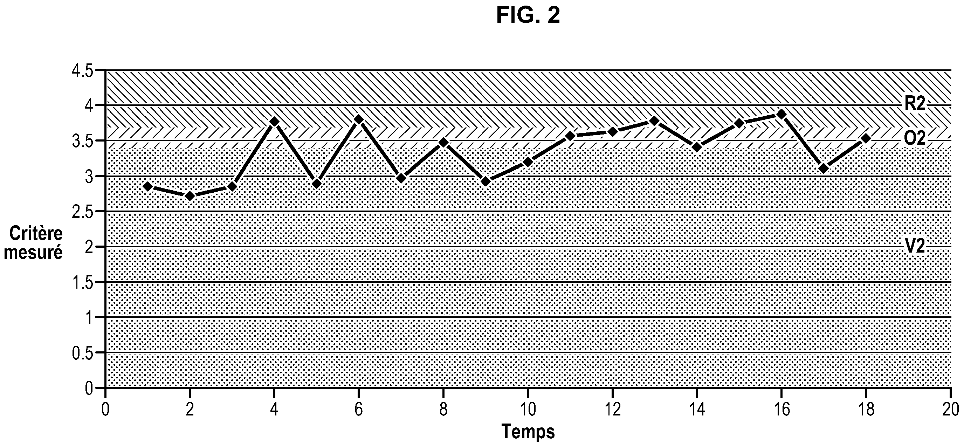

Un problème survient lorsque l'on souhaite suivre plusieurs indicateurs statistiques en même temps pour une même dimension caractéristique mesurée. Prenons le cas par exemple d'un premier indicateur statistique dont la carte de contrôle est représenté par le graphique illustré à la figure 1, et un deuxième indicateur statistique, différent du premier, dont la carte de contrôle est représenté par le graphique illustré à la figure 2. Sur le graphique illustré à la figure 2 , la notation des zones est similaire à celle utilisée pour le graphique de la figure 1, à savoir que la zone V2 correspond à la zone de validation du deuxième indicateur statistique, la zone O2 correspond à la zone de contrôle du deuxième indicateur statistique, et la zone R2 correspond à la zone de sanction du deuxième indicateur statistique.

Les résultats des indicateurs statistiques pour une même dimension caractéristique dans un échantillon prélevé à une période donnée peuvent toutefois être différents. On constate par exemple qu'à la période n°4 le deuxième indicateur statistique doit conduire à une sanction tandis que le premier indicateur traduit, pour la même période, une action de contrôle.

Pour connaitre l'action globale à envisager dans le suivi de la fabrication, il est donc nécessaire d'analyser individuellement chaque carte graphique des différents indicateurs statistiques et en tirer une conclusion globale, selon les règles de pilotage imposées. Cette analyse est toutefois très longue et est d'autant plus longue qu'il y a d'indicateurs statistiques à évaluer. Cela nuit donc à la cadence du flux de fabrication global, impliquant indirectement des augmentations de coûts de fabrication.

Un but de la présente invention est donc de fournir un procédé de fabrication de pièces basé sur l'analyse de plusieurs indicateurs statistiques différents représentatifs d'une dimension caractéristique des pièces, qui permet de résoudre au moins l'un des inconvénients précités.

En particulier un but de la présente invention est de fournir un procédé de fabrication de pièces qui permet une analyse simultanée de plusieurs indicateurs statistiques différents représentatifs d'une dimension caractéristique des pièces.

Encore un but de la présente invention est de fournir un procédé de fabrication de pièces qui offre un contrôle accrue de la qualité des pièces fabriquées tout en permettant de conserver des cadences élevées, imposées notamment car les contraintes industrielles de fabrication.

EXPOSE DE L'INVENTION

A cette fin, on propose un procédé de fabrication de pièces basé sur l'analyse de plusieurs indicateurs statistiques différents représentatifs d'une dimension caractéristique des pièces, où :

- Chaque indicateur statistique est calculé à partir d'une moyenne $\mu$ et d'un écart-type $\sigma$ de la dimension caractéristique mesurée sur plusieurs pièces produites par un dispositif de fabrication, chaque indicateur statistique étant associé à une première valeur de référence et à une deuxième valeur de référence supérieure à la première valeur de référence, définissant :

  ∘ Un ensemble de validation comprenant les couples ($\mu$ ;$\sigma$) où l'indicateur statistique est supérieur ou égal à la deuxième valeur de référence ;
  ∘ Un ensemble de sanction comprenant les couples ($\mu$ ;$\sigma$) où l'indicateur statistique est inférieur ou égal à la première valeur de référence ; et
  ∘ Un ensemble de contrôle comprenant les couples ($\mu$ ;$\sigma$) où l'indicateur statistique est compris entre la première valeur de référence et la deuxième valeur de référence ;

- On définit :

  ∘ un ensemble global de validation correspondant à une combinaison ensembliste des différents ensembles de validation de chaque indicateur statistique ;
  ∘ un ensemble global de sanction correspondant à une combinaison ensembliste des différents ensembles de sanction de chaque indicateur statistique ;
  ∘ un ensemble global de contrôle comprenant les couples ($\mu$ ;$\sigma$) non compris dans l'ensemble global de validation et dans l'ensemble global de sanction ;

- On prélève parmi les pièces produites par le dispositif de fabrication un échantillon comprenant plusieurs pièces, on mesure la dimension caractéristique de chaque pièce de l'échantillon, et on calcule une moyenne $\mu_m$ et un écart-type $\sigma_m$ de la dimension caractéristique mesurée pour l'échantillon prélevé ;
- On détermine à quel ensemble global parmi l'ensemble global de validation, l'ensemble global de sanction et l'ensemble global de contrôle appartient le couple comprenant la moyenne $\mu_m$ et l'écart-type $\sigma_m$ de la dimension caractéristique mesurée, et on pilote la fabrication en fonction de l'ensemble global ainsi déterminé, par exemple en ajustant les paramètres de réglage du dispositif de fabrication.

Chacune des étapes présentées est de préférence faite de façon automatisée.
L'étape de mesure de la dimension caractéristique peut être faite avec un dispositif de mesure, comprenant par exemple des capteurs permettant de réaliser une mesure automatisée de dimensions spécifiques de la pièce.
Les étapes de calcul peuvent être faites par tout dispositif de calcul approprié, tel que par exemple des moyens de traitement de données informatiques, tel qu'un ordinateur.
L'étape de pilotage peut par exemple être réalisée par un dispositif de pilotage intégrant des moyens de traitement pour intégrer et traiter les données issues des étapes de calcul, afin de corriger tout anomalie détectée dans la production et corriger le flux de production. En particulier, le dispositif de pilotage est prévu pour corriger les paramètres d'entrée du dispositif de production dont sont issues les pièces.
Le dispositif de pilotage vient donc de préférence ajuster les paramètres de réglage du dispositif de fabrication utilisé pour fabriquer les pièces afin par exemple de réduire l'écart entre la valeur de l'un des indicateurs statistiques et la valeur de référence correspondante.
De manière plus générale, on cherche à optimiser l'écart entre la valeur de l'indicateur statistique et la valeur de référence pour que la production des pièces soit conforme aux exigences du cahier des charges associé. On modifie les paramètres de production pour modifier, resp. corriger, l'écart identifié entre la valeur de l'indicateur statistique et la valeur de référence. En fonction de l'indicateur statistique utilisé, optimiser l'écart pourra par exemple consister à réduire l'écart identifié.
Des aspects préférés mais non limitatifs de ce procédé, pris seuls ou en combinaison, sont les suivants :

- la détermination de l'ensemble global auquel appartient le couple comprenant la moyenne $\mu_m$ et l'écart-type $\sigma_m$ de la dimension caractéristique mesurée est faite visuellement, où :

◦ On représente le couple comprenant la moyenne $\mu_m$ et l'écart-type $\sigma_m$ de la dimension caractéristique mesurée sur un graphique de pilotage $(\mu ; \sigma)$ ayant en abscisse la moyenne $\mu$ et en ordonnée l'écart-type $\sigma$ de la dimension représentative, sur lequel est affiché :

- Une zone graphique de validation comprenant les couples $(\mu ; \sigma)$ de l'ensemble global de validation ;
- Une zone graphique de sanction comprenant les couples $(\mu ; \sigma)$ de l'ensemble global de sanction ;
- Une zone graphique de contrôle comprenant les couples $(\mu ; \sigma)$ de l'ensemble global de contrôle ;

◦ On détermine l'ensemble global associé en fonction de la zone graphique à l'intérieur de laquelle se situe ledit couple.

- on effectue plusieurs prélèvements d'échantillon à différents moments, les différents couples comprenant la moyenne $\mu_m$ et l'écart-type $\sigma_m$ des dimensions caractéristiques mesurées pour les échantillons ayant une représentation sur le graphique de pilotage $(\mu ; \sigma)$ variant en fonction du moment auquel l'échantillon a été prélevé.
- l'ensemble global de validation correspond à une intersection des différents ensembles de validation de chaque indicateur statistique, et l'ensemble global de sanction correspond à une réunion des différents ensembles de sanction de chaque indicateur statistique.
- l'ensemble global de validation correspond à une réunion des différents ensembles de validation de chaque indicateur statistique, et l'ensemble global de sanction correspond à une intersection des différents ensembles de sanction de chaque indicateur statistique.
- on analyse trois indicateurs statistiques différents, appelés respectivement premier indicateur statistique, deuxième indicateur statistique, et troisième indicateur statistique, où :

◦ l'ensemble global de validation correspond à la réunion de l'ensemble de validation du premier indicateur statistique avec l'intersection entre l'ensemble de validation du deuxième indicateur statistique et l'ensemble de validation du troisième indicateur statistique ; et
◦ l'ensemble global de sanction correspond à l'intersection entre l'ensemble de validation du premier indicateur statistique et la réunion de l'ensemble de validation du deuxième indicateur statistique avec l'ensemble de validation du troisième indicateur statistique.

- selon le procédé :

◦ le premier indicateur statistique est un premier indice de capabilité Cpk défini par la formule :

$$Cpk = \frac{Min(TS - \mu ; \mu - TI)}{3\sigma}$$

◦ le deuxième indicateur statistique est un deuxième indice de capabilité Cp défini par la formule :

$$Cp = \frac{(TS - TI)/2}{3\sigma}$$

◦ le troisième indicateur statistique est un coefficient de centrage Cc défini par la formule :

$$Cc = \frac{\mu}{(TS - TI)/2}$$

◦ où :

- TS est une tolérance supérieure de la dimension caractéristique mesurée ;
- TI est une tolérance inférieure de la dimension caractéristique mesurée.

- selon le procédé :

◦ si on détermine que le couple comprenant la moyenne $\mu_m$ et l'écart-type $\sigma_m$ de la dimension caractéristique mesurée appartient à l'ensemble global de validation, alors on ne modifie pas les conditions de fabrication des pièces ;

◦ si on détermine que le couple comprenant la moyenne $\mu_m$ et l'écart-type $\sigma_m$ de la dimension caractéristique mesurée appartient à l'ensemble global de sanction, alors on stoppe la fabrication des pièces ; et

◦ si on détermine que le couple comprenant la moyenne $\mu_m$ et l'écart-type $\sigma_m$ de la dimension caractéristique mesurée appartient à l'ensemble global de contrôle, alors on ajuste les conditions de fabrication des pièces.

DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- les figures 1 et 2 sont des représentations graphiques connues de l'art antérieur permettant de suivre l'évolution d'un indicateur statistique individuel ;
- la figure 3 est une représentation d'un graphique ayant en abscisse la moyenne $\mu$ et en ordonnée l'écart-type $\sigma$ de la dimension représentative pour illustrer un indicateur statistique mesuré par rapport à une valeur cible dudit indicateur statistique ;
- la figure 4 est une représentation d'un graphique semblable à celui de la figure 3 pour illustrer un premier indicateur statistique mesuré par rapport à deux valeurs de référence de ce premier indicateur statistique afin de caractériser la conformité d'un processus de fabrication ;
- la figure 5 est une représentation d'un graphique semblable à celui de la figure 4 pour illustrer un deuxième indicateur statistique mesuré par rapport à deux valeurs de référence de ce deuxième indicateur statistique afin de caractériser la conformité d'un processus de fabrication ;
- la figure 6 est une représentation d'un graphique de pilotage selon l'invention, intégrant des informations ensemblistes des premier et deuxième indicateurs statistiques des figures 4 et 5 respectivement ;
- les figures 7 et 8 sont des représentations d'un autre graphique de pilotage selon l'invention pour suivre trois indicateurs statistiques différents.
- La figure 9 est un schéma illustrant une chaine de production intégrant un contrôle et pilotage de la production avec échantillonnage de pièces.

DESCRIPTION DETAILLEE DE L'INVENTION

Comme précisé plus haut, il est fréquent qu'un indicateur statistique soit calculé à partir d'une moyenne $\mu$ et d'un écart-type $\sigma$ de la dimension caractéristique mesurée sur plusieurs pièces.

Comme il ressort des définitions qui précèdent, de nombreux indicateurs statistiques dépendent même exclusivement de la moyenne $\mu$ et de l'écart-type $\sigma$ mesurés sur l'échantillon. C'est le cas en particulier du coefficient de centrage Cc ou des indices de capabilité Cp et Cpk.

Or il apparait que l'ensemble des populations qu'il est possible de contrôler peut être représentée par un point situé dans un demi-plan, dans lequel la moyenne $\mu$ est portée par l'axe des abscisses et l'écart-type $\sigma$ par le demi-axe des ordonnées positives.

Partant de ce constat, il est possible, pour un critère C donné de représenter l'ensemble des populations vérifiant la condition $C^{mesuré}(\mu, \sigma) \geq C^{cible}$ comme un sous-ensemble de ce demi-plan délimité à sa frontière par la courbe de niveau correspondant à la valeur $C^{cible}$ de la fonction $C^{mesuré}(\mu,\sigma)$. Le reste du graphique correspond aux couples $(\mu \,;\sigma)$ vérifiant la condition $C^{mesuré}(\mu, \sigma) < C^{cible}$.

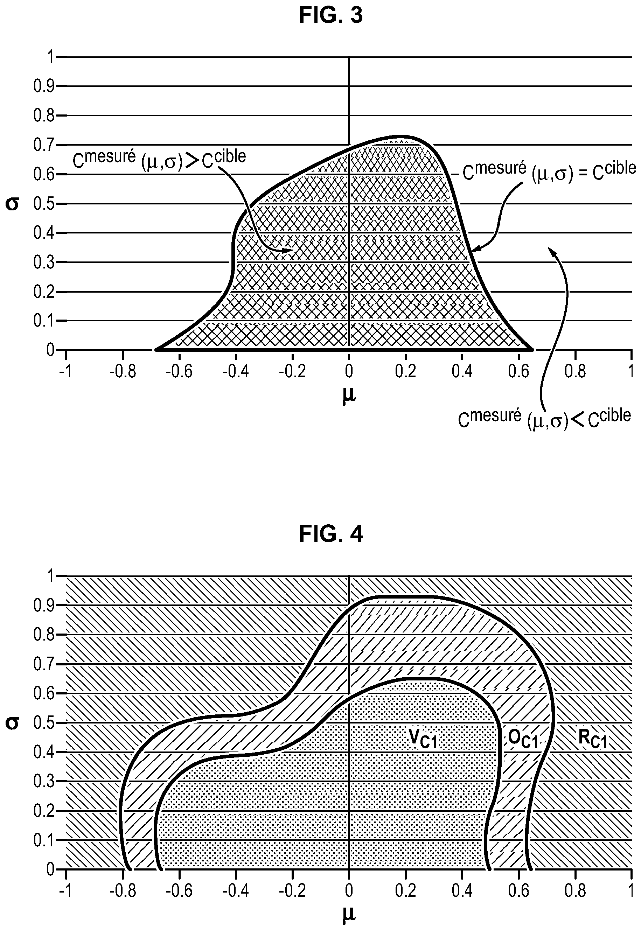

Le graphique de la figure 3 illustre une telle représentation du critère C.

Pour le suivi et le pilotage d'un flux de fabrication de pièces, un indicateur statistique est en général associé à deux valeurs de référence qui permettent de définir différents ensembles de population, c'est-à-dire différents ensembles de couples $(\mu \,;\sigma)$, qu'on associe à un degré de conformité de l'indicateur statistique étudié.

Prenons par exemple un indicateur statistique ayant une première valeur de référence et à une deuxième valeur de référence supérieure à la première valeur de référence, les différents ensembles de conformité sont définis comme suit :

- Un ensemble de validation comprenant les couples $(\mu \,;\sigma)$ où l'indicateur statistique est supérieur ou égal à la deuxième valeur de référence ;
- Un ensemble de sanction comprenant les couples $(\mu \,;\sigma)$ où l'indicateur statistique est inférieur ou égal à la première valeur de référence ; et
- Un ensemble de contrôle comprenant les couples $(\mu \,;\sigma)$ où l'indicateur statistique est compris entre la première valeur de référence et la deuxième valeur de référence.

Un tel indicateur statistique peut être représenté sur un graphique en ($\mu$ ;$\sigma$) similaire à celui de la figure 3.

La figure 4 illustre par exemple un tel graphique pour un premier indicateur $C_1(\mu, \sigma)$, où la zone graphique $V_{C1}$ regroupe les couples ($\mu$ ;$\sigma$) de l'ensemble de validation de l'indicateur $C_1(\mu, \sigma)$, la zone graphique $R_{C1}$ regroupe les couples ($\mu$ ;$\sigma$) de l'ensemble de sanction de l'indicateur $C_1(\mu, \sigma)$, et la zone graphique $O_{C1}$ regroupe les couples ($\mu$ ;$\sigma$) de l'ensemble de contrôle de l'indicateur $C_1(\mu, \sigma)$.

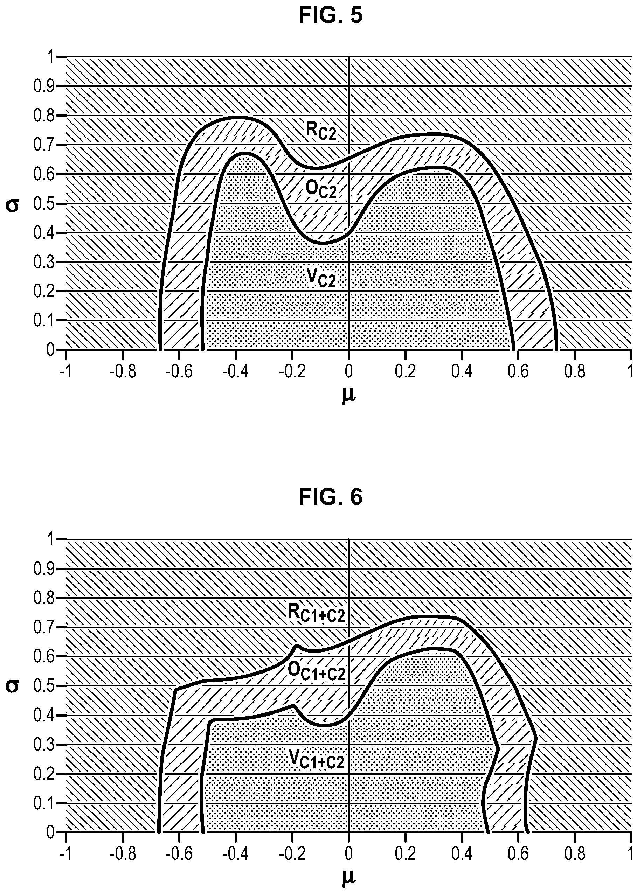

La figure 5 illustre un tel graphique pour un deuxième indicateur $C_2(\mu, \sigma)$, où la zone graphique $V_{C2}$ regroupe les couples ($\mu$ ;$\sigma$) de l'ensemble de validation de l'indicateur $C_2(\mu, \sigma)$, la zone graphique $R_{C2}$ regroupe les couples ($\mu$ ;$\sigma$) de l'ensemble de sanction de l'indicateur $C_2(\mu, \sigma)$, et la zone graphique $O_{C2}$ regroupe les couples ($\mu$ ;$\sigma$) de l'ensemble de contrôle de l'indicateur $C_2(\mu, \sigma)$.

De préférence, une zone de validation est représentée graphiquement par une zone verte, une zone de sanction est représentée par une zone rouge, et une zone de contrôle est représentée par une zone orange.

Dans ce cas, on note $C_1^{Vert/Orange}$ et $C_1^{Orange/Rouge}$ les première et deuxième valeurs de référence du premier indicateur statistique $C_1(\mu, \sigma)$ respectivement, et on note $C_2^{Vert/Orange}$ et $C_2^{Orange/Rouge}$ les première et deuxième valeur de référence du deuxième indicateur statistique $C_2(\mu, \sigma)$ respectivement.

On peut également définir les zones verte (correspondant à une zone de validation), orange (correspondant à une zone de contrôle) et rouge (correspondant à une zone de sanction) des graphiques de suivi des indicateurs statistiques $C_1(\mu, \sigma)$ et $C_2(\mu, \sigma)$ comme suit :

-
$$Zone\ Verte_1 = \left\{ (\mu; \sigma) \in R \times R_+ | C_1(\mu, \sigma) \geq C_1^{Vert/Orange} \right\}$$

-
$$Zone\ Orange_1 = \left\{ (\mu; \sigma) \in R \times R_+ | C_1^{Orange/Rouge} \leq C_1(\mu, \sigma) < C_1^{Vert/Orange} \right\}$$

-
$$Zone\ Rouge_1 = \left\{ (\mu; \sigma) \in R \times R_+ | C_1(\mu, \sigma) < C_1^{Orange/Rouge} \right\}$$

et

-
$$Zone\ Verte_2 = \left\{ (\mu; \sigma) \in R \times R_+ | C_1(\mu, \sigma) \geq C_2^{Vert/Orange} \right\}$$

-
$$Zone\ Orange_2 = \left\{ (\mu; \sigma) \in R \times R_+ | C_2^{Orange/Rouge} \leq C_2(\mu, \sigma) < C_2^{Vert/Orange} \right\}$$

-
$$Zone\ Rouge_2 = \left\{ (\mu; \sigma) \in R \times R_+ | C_1(\mu, \sigma) < C_2^{Orange/Rouge} \right\}$$

Une telle approche ensembliste est particulièrement avantageuse lorsque l'on cherche à suivre plusieurs indicateurs statistiques de manière simultanée.

En effet, on peut à partir des différents ensembles de chaque indicateur statistique définir différents ensembles globaux qui représentent des niveaux de conformité intégrant des contraintes de plusieurs critères statistiques. Ainsi, de préférence, on définit :

- un ensemble global de validation correspondant à une combinaison ensembliste des différents ensembles de validation de chaque indicateur statistique ;
- un ensemble global de sanction correspondant à une combinaison ensembliste des différents ensembles de sanction de chaque indicateur statistique ;
- un ensemble global de contrôle comprenant les couples ($\mu$ ;$\sigma$) non compris dans l'ensemble global de validation et dans l'ensemble global de sanction ;

De cette manière, après avoir prélevé un échantillon comprenant plusieurs pièces du flux de fabrication, on mesure la dimension caractéristique de chaque pièce de l'échantillon, on calcule une moyenne $\mu_m$ et un écart-type $\sigma_m$ de la dimension caractéristique mesurée pour l'échantillon prélevé, puis on détermine à quel ensemble global parmi les différents ensembles de conformité ci-dessus appartient le couple comprenant la moyenne $\mu_m$ et l'écart-type $\sigma_m$ de la dimension caractéristique mesurée

On peut ensuite piloter le flux de fabrication en fonction de l'ensemble global ainsi déterminé.

Par exemple, si on détermine que le couple comprenant la moyenne $\mu_m$ et l'écart-type $\sigma_m$ de la dimension

caractéristique mesurée appartient à l'ensemble global de validation, on considère que le flux de fabrication est conforme aux exigences de fabrication, et on ne modifie donc pas les conditions de fabrication des pièces.

Si on détermine que le couple comprenant la moyenne $\mu_m$ et l'écart-type $\sigma_m$ de la dimension caractéristique mesurée appartient à l'ensemble global de sanction, cela signifie qu'il y a un écart significatif entre la dimension caractéristique mesurée sur l'échantillon prélevé et les exigences de fabrication. Dans ce cas, on peut par exemple stopper la fabrication des pièces pour réinitialiser le flux de fabrication.

Si on détermine que le couple comprenant la moyenne $\mu_m$ et l'écart-type $\sigma_m$ de la dimension caractéristique mesurée appartient à l'ensemble global de contrôle, cela signifie qu'il y a un risque d'écart avec les valeurs de référence, et qu'il faut donc surveiller le flux de fabrication avec plus d'attention, voire ajuster les conditions de fabrication des pièces.

De préférence, la détermination de l'ensemble global auquel appartient le couple comprenant la moyenne $\mu_m$ et l'écart-type $\sigma_m$ de la dimension caractéristique mesurée est faite visuellement. On pourra à cet égard utiliser par exemple un moniteur sur lequel sont affichées les informations de contrôle.

Pour ce faire, on peut par exemple utiliser un graphique de pilotage $(\mu\,;\sigma)$ ayant en abscisse la moyenne $\mu$ et en ordonnée l'écart-type $\sigma$ de la dimension représentative, sur lequel est affiché :

- Une zone graphique de validation comprenant les couples $(\mu\,;\sigma)$ de l'ensemble global de validation ;
- Une zone graphique de sanction comprenant les couples $(\mu\,;\sigma)$ de l'ensemble global de sanction ;
- Une zone graphique de contrôle comprenant les couples $(\mu\,;\sigma)$ de l'ensemble global de contrôle.

On peut ensuite représenter sur ce graphique de pilotage le couple comprenant la moyenne $\mu_m$ et l'écart-type $\sigma_m$ de la dimension caractéristique mesurée. On détermine simplement l'ensemble global associé à ce couple $(\mu_m\,;\sigma_m)$ en fonction de la zone graphique à l'intérieur de laquelle se situe ledit couple.

Les combinaisons ensemblistes formant les ensembles globaux dépendent des contraintes imposées au processus de fabrication.

Selon un mode de réalisation, l'ensemble global de validation correspond à une intersection des différents ensembles de validation de chaque indicateur statistique, et l'ensemble global de sanction correspond à une réunion des différents ensembles de sanction de chaque indicateur statistique.

Selon un autre mode de réalisation, l'ensemble global de validation correspond à une réunion des différents ensembles de validation de chaque indicateur statistique, et l'ensemble global de sanction correspond à une intersection des différents ensembles de sanction de chaque indicateur statistique.

Reprenons l'exemple ci-dessus où les zones de conformité sont respectivement des zones verte, orange et rouge. Lorsque les deux indicateurs statistiques $C_1(\mu, \sigma)$ et $C_2(\mu, \sigma)$ doivent être suivis simultanément et sont calculés à partir des mêmes mesures, il est alors possible de définir une zone Rouge, une zone Orange et une zone Verte globales par :

- 
$$Zone\ Verte = Zone\ Verte_1 \cap Zone\ Verte_2$$

- 
$$Zone\ Orange = (Zone\ Verte_1 \cap Zone\ Orange_2) \cup (Zone\ Orange_1 \cap Zone\ Verte_2) \cup (Zone\ Orange_1 \cap Zone\ Orange_2)$$

- 
$$Zone\ Rouge = Zone\ Rouge_1 \cup Zone\ Rouge_2$$

Selon cet exemple où l'on cherche à suivre la conjonction de deux indicateurs, la zone verte globale à prendre en compte est l'intersection des deux zones vertes de chacun des deux indicateurs, la zone rouge globale est la réunion des deux zones rouges de chacun des deux indicateurs, et la zone orange est constituée du reste du demi-plan $(\mu\,;\sigma)$.

Graphiquement, cela peut être représenté dans un demi-plan $(\mu\,;\sigma)$ comme à la figure 6, où la zone graphique $V_{C1+C2}$ regroupe les couples $(\mu\,;\sigma)$ de l'ensemble global de validation (zone Verte), la zone graphique $R_{C1+C2}$ regroupe les couples $(\mu\,;\sigma)$ de l'ensemble global de sanction (zone Rouge), et la zone graphique $O_{C1+C2}$ regroupe les couples $(\mu\,;\sigma)$ de l'ensemble global de contrôle (zone Orange).

Un tel graphique de pilotage permet à lui seul de suivre de façon synthétique les deux indicateurs et d'établir un niveau de conformité des valeurs mesurées, simplement en positionnant sur le graphique le couple comprenant la moyenne $\mu_m$ et l'écart-type $\sigma_m$ de la dimension caractéristique mesurée les valeurs de moyenne et d'écart-type calculées lors de la mesure.

Le cas général consiste en un suivi simultané de $n$ indicateurs $C_1(\mu, \sigma)$, $C_2(\mu, \sigma)$, ..., $C_i(\mu, \sigma)$, ..., $C_n(\mu, \sigma)$,

ayant pour chaque indicateur *i* une *Zone Verte$_i$* (zone de validation), une *Zone Orange$_i$* (zone de contrôle) et une *Zone Rouge$_i$* (zone de sanction) délimitées par les valeurs $C_i^{Vert/Orange}$ et $C_i^{Orange/Rouge}$, et par conséquent définies par :

$$Zone\ Verte_i = \left\{(\mu;\sigma) \in R \times R_+ | C_1(\mu,\sigma) \geq C_1^{Vert/Orange}\right\}$$

$$Zone\ Orange_i = \left\{(\mu;\sigma) \in R \times R_+ | C_1^{Orange/Rouge} \leq C_1(\mu,\sigma) < C_1^{Vert/Orange}\right\}$$

$$Zone\ Rouge_i = \left\{(\mu;\sigma) \in R \times R_+ | C_1(\mu,\sigma) < C_1^{Orange/Rouge}\right\}$$

Dans le cas où l'ensemble global de validation correspond à une intersection des différents ensembles de validation de chaque indicateur statistique, et l'ensemble global de sanction correspond à une réunion des différents ensembles de sanction de chaque indicateur statistique, cela se traduit graphiquement de la manière suivante :

$$Zone\ Verte = \bigcap_{i=1}^{n}(Zone\ Verte_i)$$

$$Zone\ Rouge = \bigcup_{i=1}^{n}(Zone\ Rouge_i)$$

$$Zone\ Orange = R \times R_+ \backslash (Zone\ Verte \cup Zone\ Rouge)$$

Le graphique ($\mu$ ;$\sigma$) permet donc de remplacer n graphes par un seul, donnant une conformité globale synthétique et immédiate de l'état d'une production surveillée à un instant donné grâce aux outils de la maîtrise statistique des procédés.

Des cas particuliers plus complexes peuvent être également traités d'une manière analogue.

Considérons par exemple un processus de fabrication suivi avec trois indicateurs statistiques $C_1(\mu, \sigma)$, $C_2(\mu, \sigma)$ et $C_3(\mu, \sigma)$. Dans le cas où les règles de validation autorisent de valider soit l'indicateur $C_1(\mu, \sigma)$, soit en guise d'alternative la conjonction des indicateurs $C_2(\mu, \sigma)$ et $C_3(\mu, \sigma)$, les zones globales verte, orange et rouge à représenter sont :

$$Zone\ Verte = Zone\ Verte_1 \cup (Zone\ Verte_2 \cap Zone\ Verte_3)$$

$$Zone\ Rouge = Zone\ Rouge_1 \cap (Zone\ Rouge_2 \cup Zone\ Rouge_3)$$

$$Zone\ Orange = R \times R_+ \backslash (Zone\ Verte \cup Zone\ Rouge)$$

Pour la surveillance d'un flux industriel de fabrication de pièces, on peut par exemple appliquer, on peut par exemple appliquer ce procédé de suivi en considérant que le premier indicateur statistique $C_1(\mu, \sigma)$ correspond à l'indice de capabilité Cpk, le deuxième indicateur statistique $C_2(\mu, \sigma)$ correspond à l'indice de capabilité Cp, et le troisième indicateur statistique $C_3(\mu, \sigma)$ correspond au coefficient de centrage Cc.

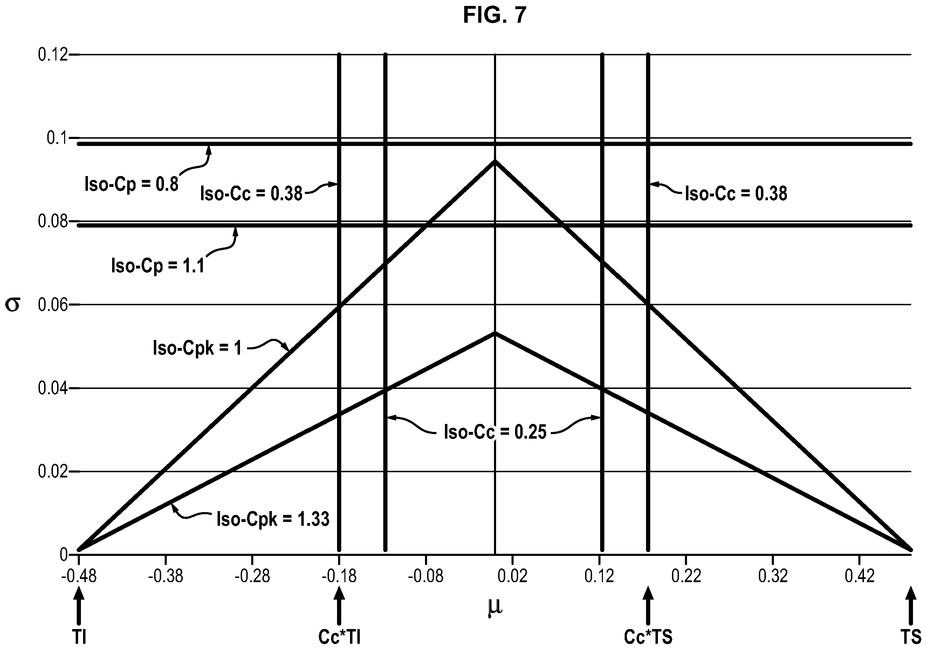

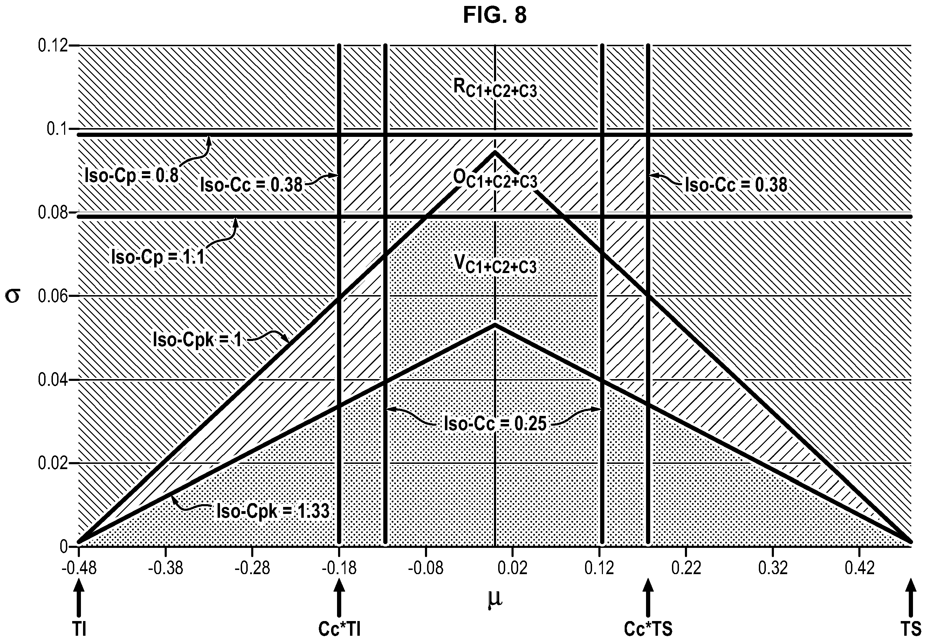

Les iso-valeurs de ces trois indicateurs se représentent de façon très simple dans le diagramme ($\mu$ ;$\sigma$) comme on le voit représenté aux figures 7 et 8, où :

- Les iso-Cc sont représentées par des droites verticales coupant l'axe des abscisses aux points Cc*TI et Cc*TS ;
- Les iso-Cp se représentent comme des droites horizontales coupant l'axe des ordonnées au point IT/(3*Cp) ;
- Les iso-Cpk se représentent comme des droites inclinées coupant l'axe des abscisses aux points TI et TS, et dont la pente est d'autant plus forte que le Cpk imposé est faible.

La figure 8 représente le graphique avec les différentes zones de conformité selon les combinaisons ensemblistes données en exemple ci-dessus. La zone Verte est notée $V_{C1+C2+C3}$, la zone Orange est notée $O_{C1+C2+C3}$, et la zone Rouge est notée $R_{C1+C2+C3}$.

De manière avantageuse, on pourra également prévoir une représentation spécifique des couples ($\mu_m$ ;$\sigma_m$) des dimensions caractéristiques mesurées pour les échantillons prélevés successivement au cours du temps.

On peut par exemple prévoir une représentation sur le graphique de pilotage ($\mu$ ;$\sigma$) du couple ($\mu_m$ ;$\sigma_m$) qui varie en fonction du moment auquel l'échantillon a été prélevé. De la sorte, le graphique de pilotage permet également de représenter une dimension temporelle dans l'optique d'un suivi et d'un pilotage chronologique de production période après période.

Une solution possible consiste à hiérarchiser chronologiquement les marqueurs représentant chacune des mesures effectuées successivement en leur donnant des tailles et des couleurs différentes. Par exemple on peut utiliser des marqueurs ayant une taille de plus en plus petite et étant de moins en moins opaques à mesure qu'ils correspondent à une mesure plus ancienne.

Le procédé proposé peut être mis en oeuvre dans une chaîne de fabrication de pièces, pouvant être totalement ou partiellement automatisée, où des contrôles en cours de production permettent de piloter le flux de fabrication, c'est-à-dire ajuster les conditions de fabrication pour s'assurer que les pièces fabriquées continuent de répondre aux critères de qualités requis.

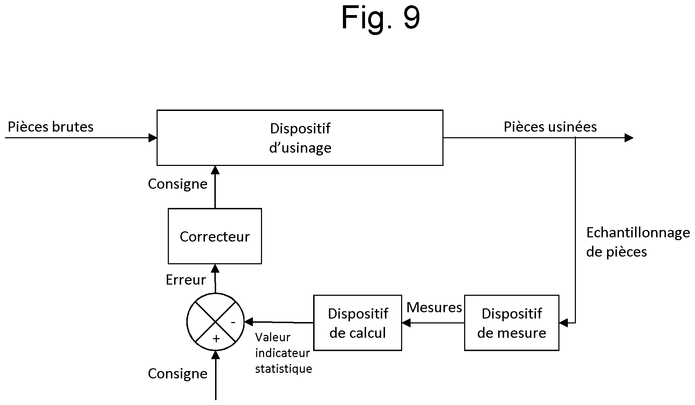

La figure 9 donne un exemple d'une telle chaine de fabrication dans laquelle un dispositif d'usinage, comme par exemple une machine 5 axes, est utilisé pour fabriquer des pièces selon une consigne spécifique. La consigne spécifique peut par exemple porter sur une dimension caractéristique particulière. A la place du dispositif d'usinage, il pourrait bien entendu être utilisé un dispositif de fabrication non limité à de l'usinage de pièces.

Dans cette chaine automatisée de production, des pièces sont prélevées en sortie du dispositif d'usinage afin de former un échantillon et transmise à un dispositif de mesure qui mesure une ou plusieurs dimensions caractéristiques de chaque pièce de l'échantillon prélevé. Un tel dispositif de mesure peut par exemple être une machine de mesure tridimensionnelle ayant des capteurs qui mesurent automatiquement les dimensions caractéristiques souhaitées de chacune des pièces.

Les données de mesures issues du dispositif de mesure sont ensuite transmises à un dispositif de calcul qui les traite pour calculer un ou plusieurs indicateurs statistiques représentatifs d'une des dimensions caractéristiques des pièces.

La valeur calculée de l'indicateur statistique est ensuite comparée à une consigne de référence sur la dimension caractéristique afin de piloter le flux de fabrication. Plus précisément, les résultats de cette comparaison permettent d'éventuellement ajuster les paramètres d'entrée du dispositif d'usinage. Dans le cas d'espèce, la consigne de référence est définie par l'ensemble global de validation, l'ensemble global de sanction et l'ensemble global de contrôle.

Si un écart est constaté, impliquant une erreur, par exemple si la valeur de l'indicateur statistique sur la dimension caractéristique est en dehors d'une plage acceptable définie par la consigne de référence, des mesures correctrices sont déterminées par un correcteur afin d'ajuster les paramètres d'entrée du dispositif d'usinage. L'objectif des modifications des paramètres d'entrée du dispositif d'usinage est de corriger l'écart constaté, pour que la valeur de l'indicateur statistique sur la dimension caractéristique soit de nouveau dans une plage acceptable.

## Revendications

1. Procédé de fabrication de pièces produites avec un dispositif de fabrication, basé sur l'analyse simultanée de plusieurs indicateurs statistiques différents représentatifs d'une dimension caractéristique des pièces, où :

   - Chaque indicateur statistique est calculé, avec un dispositif de calcul, à partir d'une moyenne $\mu$ et d'un écart-type $\sigma$ de la dimension caractéristique mesurée sur plusieurs pièces, chaque indicateur statistique étant associé à une première valeur de référence et à une deuxième valeur de référence supérieure à la première valeur de référence, définissant :

     ◦ Un ensemble de validation comprenant les couples ($\mu$ ;$\sigma$) où l'indicateur statistique est supérieur ou égal à la deuxième valeur de référence ;
     ◦ Un ensemble de sanction comprenant les couples ($\mu$ ;$\sigma$) où l'indicateur statistique est inférieur ou égal à la première valeur de référence ; et
     ◦ Un ensemble de contrôle comprenant les couples ($\mu$ ;$\sigma$) où l'indicateur statistique est compris entre la première valeur de référence et la deuxième valeur de référence ;

   - Il est définit :

     ◦ un ensemble global de validation correspondant à une combinaison ensembliste des différents ensembles de validation de chaque indicateur statistique ;
     ◦ un ensemble global de sanction correspondant à une combinaison ensembliste des différents ensembles de sanction de chaque indicateur statistique ;

◦ un ensemble global de contrôle comprenant les couples ($\mu$ ;$\sigma$) non compris dans l'ensemble global de validation et dans l'ensemble global de sanction ;

et le procédé comprend les étapes automatisées suivantes consistant à :

- prélever parmi les pièces produites par le dispositif de fabrication un échantillon comprenant plusieurs pièces, mesurer, avec un dispositif de mesure, la dimension caractéristique de chaque pièce de l'échantillon, et calculer, avec le dispositif de calcul, une moyenne $\mu_m$ et un écart-type $\sigma_m$ de la dimension caractéristique mesurée pour l'échantillon prélevé ;
- déterminer, avec un dispositif de pilotage, à quel ensemble global parmi l'ensemble global de validation, l'ensemble global de sanction et l'ensemble global de contrôle appartient le couple comprenant la moyenne $\mu_m$ et l'écart-type $\sigma_m$ de la dimension caractéristique mesurée, et piloter, avec le dispositif de pilotage, la fabrication en fonction de l'ensemble global ainsi déterminé.

2. Procédé selon la revendication 1, dans lequel la détermination de l'ensemble global auquel appartient le couple comprenant la moyenne $\mu_m$ et l'écart-type $\sigma_m$ de la dimension caractéristique mesurée est faite visuellement, le procédé comprenant en outre les étapes suivantes consistant à:

- représenter le couple comprenant la moyenne $\mu_m$ et l'écart-type $\sigma_m$ de la dimension caractéristique mesurée sur un graphique de pilotage ($\mu$ ;$\sigma$) ayant en abscisse la moyenne $\mu$ et en ordonnée l'écart-type $\sigma$ de la dimension représentative, sur lequel est affiché :

◦ Une zone graphique de validation comprenant les couples ($\mu$ ;$\sigma$) de l'ensemble global de validation ;
◦ Une zone graphique de sanction comprenant les couples ($\mu$ ;$\sigma$) de l'ensemble global de sanction ;
◦ Une zone graphique de contrôle comprenant les couples ($\mu$ ;$\sigma$) de l'ensemble global de contrôle ;

- déterminer l'ensemble global associé en fonction de la zone graphique à l'intérieur de laquelle se situe ledit couple.

3. Procédé selon la revendication 2, dans lequel plusieurs prélèvements d'échantillon sont effectués à différents moments, les différents couples comprenant la moyenne $\mu_m$ et l'écart-type $\sigma_m$ des dimensions caractéristiques mesurées pour les échantillons ayant une représentation sur le graphique de pilotage ($\mu$ ;$\sigma$) variant en fonction du moment auquel l'échantillon a été prélevé.

4. Procédé selon l'une quelconque des revendications 2 ou 3, dans lequel le graphique de pilotage ($\mu$ ;$\sigma$) est affiché sur un moniteur.

5. Procédé selon l'une quelconque des revendications 1 à 4, dans lequel l'ensemble global de validation correspond à une intersection des différents ensembles de validation de chaque indicateur statistique, et l'ensemble global de sanction correspond à une réunion des différents ensembles de sanction de chaque indicateur statistique.

6. Procédé selon l'une quelconque des revendications 1 à 4, dans lequel l'ensemble global de validation correspond à une réunion des différents ensembles de validation de chaque indicateur statistique, et l'ensemble global de sanction correspond à une intersection des différents ensembles de sanction de chaque indicateur statistique.

7. Procédé selon l'une quelconque des revendications 1 à 6, dans lequel sont analysés trois indicateurs statistiques différents, appelés respectivement premier indicateur statistique, deuxième indicateur statistique, et troisième indicateur statistique, où :

- l'ensemble global de validation correspond à la réunion de l'ensemble de validation du premier indicateur statistique avec l'intersection entre l'ensemble de validation du deuxième indicateur statistique et l'ensemble de validation du troisième indicateur statistique ; et
- l'ensemble global de sanction correspond à l'intersection entre l'ensemble de validation du premier indicateur statistique et la réunion de l'ensemble de validation du deuxième indicateur statistique avec l'ensemble de validation du troisième indicateur statistique.

8. Procédé selon la revendication 7, dans lequel :

- le premier indicateur statistique est un premier indice de capabilité Cpk défini par la formule :

$$Cpk = \frac{Min(TS - \mu \,;\, \mu - TI)}{3\sigma}$$

- le deuxième indicateur statistique est un deuxième indice de capabilité Cp défini par la formule :

$$Cp = \frac{(TS - TI)/2}{3\sigma}$$

- le troisième indicateur statistique est un coefficient de centrage Cc défini par la formule :

$$Cc = \frac{\mu}{(TS - TI)/2}$$

- où :

   ◦ TS est une tolérance supérieure de la dimension caractéristique mesurée ;
   ◦ TI est une tolérance inférieure de la dimension caractéristique mesurée.

**9.** Procédé selon l'une quelconque des revendications 1 à 8, dans lequel :

- s'il est déterminé que le couple comprenant la moyenne $\mu_m$ et l'écart-type $\sigma_m$ de la dimension caractéristique mesurée appartient à l'ensemble global de validation, alors les conditions de fabrication des pièces ne sont pas modifiées ;
- s'il est déterminé que le couple comprenant la moyenne $\mu_m$ et l'écart-type $\sigma_m$ de la dimension caractéristique mesurée appartient à l'ensemble global de sanction, alors la fabrication des pièces est stoppée ; et
- s'il est déterminé que le couple comprenant la moyenne $\mu_m$ et l'écart-type $\sigma_m$ de la dimension caractéristique mesurée appartient à l'ensemble global de contrôle, alors les conditions de fabrication des pièces sont ajustées en ajustant les paramètres de réglage du dispositif de fabrication.

**Patentansprüche**

**1.** Verfahren zur Herstellung von Teilen, die mit einer Herstellungsvorrichtung hergestellt werden, basierend auf der gleichzeitigen Analyse mehrerer unterschiedlicher statistischer Indikatoren, die für eine charakteristische Abmessung der Teile repräsentativ sind, wobei:

- jeder statistische Indikator mit einer Rechenvorrichtung auf der Basis eines Mittelwerts $\mu$ und einer Standardabweichung $\sigma$ der auf mehreren Teilen gemessenen charakteristischen Abmessung berechnet wird, wobei jeder statistische Indikator einem ersten Referenzwert und einem zweiten Referenzwert, der größer als der erste Referenzwert ist, zugeordnet wird, definierend:

   ◦ eine Validierungsmenge, umfassend die Paare ($\mu; \sigma$), wobei der statistische Indikator größer oder gleich dem zweiten Referenzwert ist;
   ◦ eine Sanktionsmenge, umfassend die Paare ($\mu; \sigma$), wobei der statistische Indikator kleiner oder gleich dem ersten Referenzwert ist; und
   ◦ eine Kontrollmenge, umfassend die Paare ($\mu; \sigma$), wobei der statistische Indikator zwischen dem ersten Referenzwert und dem zweiten Referenzwert liegt;

- festgelegt wird:

   ◦ eine globale Validierungsmenge, die einer Mengenkombination der verschiedenen Validierungsmengen jedes statistischen Indikators entspricht;
   ◦ eine globale Sanktionsmenge, die einer Mengenkombination der verschiedenen Sanktionsmengen jedes statistischen Indikators entspricht;
◦ eine globale Kontrollmenge, umfassend die Paare ($\mu$; $\sigma$), die nicht in der globalen Validierungsmenge und in der globalen Sanktionsmenge liegen;

und wobei das Verfahren die folgenden automatisierten Schritte umfasst, die darin bestehen:

- Entnehmen, von den von der Herstellungsvorrichtung produzierten Teilen, einer Probe, umfassend mehrere Teile, Messen, mit einer Messvorrichtung, der charakteristischen Abmessung jedes Teils der Probe, und Berechnen, mit der Rechenvorrichtung, eines Mittelwerts $\mu_m$, und einer Standardabweichung $\sigma_m$ der gemessenen charakteristischen Abmessung für die entnommene Probe;
- Bestimmen, mit einer Steuervorrichtung, zu welcher globalen Menge von der globalen Validierungsmenge, der globalen Sanktionsmenge und der globalen Kontrollmenge das Paar gehört, welches den Mittelwert $\mu_m$, und die Standardabweichung $\sigma_m$ der gemessenen charakteristischen Abmessung umfasst, und Steuern, mit der Steuervorrichtung, der Herstellung in Abhängigkeit von der derart bestimmten globalen Menge.

2. Verfahren nach Anspruch 1, wobei das Bestimmen der globalen Menge, zu der das Paar gehört, welches den Mittelwert $\mu_m$, und die Standardabweichung $\sigma_m$ der gemessenen charakteristischen Abmessung umfasst, visuell erfolgt, wobei das Verfahren ferner die folgenden Schritte umfasst, die darin bestehen:

- Darstellen des Paares, welches den Mittelwert $\mu_m$ und die Standardabweichung $\sigma_m$ der gemessenen charakteristischen Abmessung umfasst, auf einer Steuergrafik ($\mu$; $\sigma$) mit dem Mittelwert $\mu$ auf der Abszisse und der Standardabweichung $\sigma$ von der repräsentativen Abmessung auf der Ordinate, auf welcher angezeigt wird:

◦ eine grafische Validierungszone, umfassend die Paare ($\mu$; $\sigma$) der globalen Validierungsmenge;
◦ eine grafische Sanktionszone, umfassend die Paare ($\mu$; $\sigma$) der globalen Sanktionsmenge;
◦ eine grafische Kontrollzone, umfassend die Paare ($\mu$; $\sigma$) der globalen Kontrollmenge;

- Bestimmen der zugeordneten globalen Menge in Abhängigkeit von der grafischen Zone, in der sich das Paar befindet.

3. Verfahren nach Anspruch 2, wobei mehrere Probenahmen zu verschiedenen Zeitpunkten durchgeführt werden, wobei die verschiedenen Paare den Mittelwert $\mu_m$ und die Standardabweichung $\sigma_m$ der gemessenen charakteristischen Abmessungen für die Proben umfassen, die eine Darstellung auf der Steuergrafik ($\mu$; $\sigma$) haben, die in Abhängigkeit von dem Zeitpunkt schwankt, zu dem die Probe entnommen wurde.

4. Verfahren nach einem der Ansprüche 2 oder 3, wobei die Steuergrafik ($\mu$; $\sigma$) auf einem Monitor angezeigt wird.

5. Verfahren nach einem der Ansprüche 1 bis 4, wobei die globale Validierungsmenge einem Schnittpunkt der verschiedenen Validierungsmengen jedes statistischen Indikators entspricht, und die globale Sanktionsmenge einer Vereinigung der verschiedenen Sanktionsmengen jedes statistischen Indikators entspricht.

6. Verfahren nach einem der Ansprüche 1 bis 4, wobei die globale Validierungsmenge einer Vereinigung der verschiedenen Validierungsmengen jedes statistischen Indikators entspricht, und die globale Sanktionsmenge einem Schnittpunkt der verschiedenen Sanktionsmengen jedes statistischen Indikators entspricht.

7. Verfahren nach einem der Ansprüche 1 bis 6, wobei drei verschiedene statistische Indikatoren analysiert werden, bezeichnet jeweils als erster statistischer Indikator, zweiter statistischer Indikator und dritter statistischer Indikator, wobei:

- die globale Validierungsmenge der Vereinigung der Validierungsmenge des ersten statistischen Indikators mit dem Schnittpunkt zwischen der Validierungsmenge des zweiten statistischen Indikators und der Validierungsmenge des dritten statistischen Indikators entspricht; und
- die globale Sanktionsmenge dem Schnittpunkt zwischen der Validierungsmenge des ersten statistischen Indikators und der Vereinigung der Validierungsmenge des zweiten statistischen Indikators mit der Validierungsmenge des dritten statistischen Indikators entspricht.

8. Verfahren nach Anspruch 7, wobei:

- der erste statistische Indikator ein erster Fähigkeitsindex Cpk ist, definiert durch die Formel:

$$Cpk = \frac{Min(TS - \mu; \; \mu - TI)}{3\sigma}$$

- der zweite statistische Indikator ein zweiter Fähigkeitsindex Cp ist, definiert durch die Formel:

$$Cp = \frac{(TS - TI)/2}{3\sigma}$$

- der dritte statistische Indikator ein Zentrierkoeffizient Cc ist, definiert durch die Formel:

$$Cc = \frac{\mu}{(TS - TI)/2}$$

- wobei:

  ◦ TS eine Toleranz ist, die größer als die gemessene charakteristische Abmessung ist;
  ◦ TI eine Toleranz ist, die kleiner als die gemessene charakteristische Abmessung ist.

9. Verfahren nach einem der Ansprüche 1 bis 8, wobei:

- wenn festgestellt wird, dass das Paar, welches den Mittelwert $\mu_m$ und die Standardabweichung $\sigma_m$ der gemessenen charakteristischen Abmessung umfasst, zu der globalen Validierungsmenge gehört, die Bedingungen für die Herstellung der Teile nicht geändert werden;
- wenn festgestellt wird, dass das Paar, welches den Mittelwert $\mu_m$, und die Standardabweichung $\sigma_m$ der gemessenen charakteristischen Abmessung umfasst, zu der globalen Sanktionsmenge gehört, die Herstellung der Teile angehalten wird; und
- wenn festgestellt wird, dass das Paar, welches den Mittelwert $\mu_m$ und die Standardabweichung $\sigma_m$ der gemessenen charakteristischen Abmessung umfasst, zu der globalen Kontrollmenge gehört, die Bedingungen für die Herstellung der Teile durch Anpassen der Einstellparameter der Herstellungsvorrichtung angepasst werden.

**Claims**

1. A method for manufacturing parts produced with a manufacturing device, based on simultaneous analysis of several different statistical indicators representative of a characteristic dimension of the parts, where:

- each statistical indicator is calculated, with a calculation device, from an average $\mu$ and a standard deviation $\sigma$ of the measured characteristic dimension over several parts, each statistical indicator being associated with a first reference value and a second reference value greater than the first reference value, defining:

  ◦ a validation set comprising the couples $(\mu;\sigma)$ where the statistical indicator is greater than or equal to the second reference value;
  ◦ a sanction set comprising the couples $(\mu;\sigma)$ where the statistical indicator is less than or equal to the first reference value; and
  ◦ a control set comprising the couples $(\mu;\sigma)$ where the statistical indicator is between the first reference value and the second reference value;

- the following are defined:

  ◦ an overall validation set corresponding to a set-related combination of the different validation sets of each statistical indicator;
  ◦ an overall sanction set corresponding to a set-related combination of the different sanction sets of each statistical indicator;
◦ an overall control set comprising the couples $(\mu;\sigma)$ not included in the overall validation set and in the overall sanction set;

and the method comprises the following automated steps consisting of:

- taking a sample comprising several parts is taken from the parts produced by the manufacturing device, measuring, with a measuring device, the characteristic dimension of each part of the sample, and calculating, with the calculation device, an average $\mu_m$ and a standard deviation $\sigma_m$ of the measured characteristic dimension for the sample taken;
- determining, with a regulating device, which overall set among the overall validation set, the overall sanction set and the overall control set the couple comprising the average $\mu_m$ and the standard deviation $\sigma_m$ of the measured characteristic dimension belongs to, and operating, with the regulating device, the manufacturing as a function of the overall set determined in this way.

2. The method as claimed in Claim 1, in which determination of the overall set to which the couple comprising the average $\mu_m$ and the standard deviation $\sigma_m$ of the measured characteristic dimension belongs is done visually, the method further comprising the following steps consisting of:

- representing the couple comprising the average $\mu_m$ and the standard deviation $\sigma_m$ of the measured characteristic dimension on a regulating graphic $(\mu;\sigma)$ having as abscissa the average $\mu$ and as ordinate the standard deviation $\sigma$ of the representative dimension, on which is displayed:

  ◦ a graphic validation zone comprising the couples $(\mu;\sigma)$ of the overall validation set;
  ◦ a graphic sanction zone comprising the couples $(\mu;\sigma)$ of the overall sanction set;
  ◦ a graphic control zone comprising the couples $(\mu;\sigma)$ of the overall control set;

- determining the overall associated set as a function of the graphic zone inside, which is said couple.

3. The method as claimed in Claim 2, in which several samples are taken at different moments, the different couples comprising the average $\mu_m$ and the standard deviation $\sigma_m$ of the characteristic dimensions measured for the samples having a representation on the regulating graphic $(\mu;\sigma)$ varying as a function of the moment when the sample has been taken.

4. The method as claimed in any one of Claim 2 or 3, in which the regulating graphic $(\mu;\sigma)$ is displayed on a monitor.

5. The method as claimed in any one of Claims 1 to 4, in which the overall validation set corresponds to an intersection of the different validation sets of each statistical indicator, and the overall sanction set corresponds to grouping of the different sanction sets of each statistical indicator.

6. The method as claimed in any one of Claims 1 to 4, in which the overall validation set corresponds to grouping of the different validation sets of each statistical indicator, and the overall sanction set corresponds to an intersection of the different sanction sets of each statistical indicator.

7. The method as claimed in any one of Claims 1 to 6, in which three different statistical indicators are analysed, respectively called first statistical indicator, second statistical indicator, and third statistical indicator, where:

- the overall validation set corresponds to the grouping of the validation set of the first statistical indicator with the intersection between the validation set of the second statistical indicator and the validation set of the third statistical indicator; and
- the overall sanction set corresponds to the intersection between the validation set of the first statistical indicator and the grouping of the validation set of the second statistical indicator with the validation set of the third statistical indicator.

8. The method as claimed in Claim 7, in which:

- the first statistical indicator is a first capability index Cpk defined by the formula:

$$Cpk = \frac{Min(TS - \mu\,;\mu - TI)}{3\sigma}$$

- the second statistical indicator is a second capability index Cp defined by the formula:

$$Cp = \frac{(TS - TI)/2}{3\sigma}$$

- the third statistical indicator is a centring coefficient Cc defined by the formula:

$$Cc = \frac{\mu}{(TS - TI)/2}$$

- where:

   ◦ TS is a greater tolerance of the measured characteristic dimension;
   ◦ TI is a lesser tolerance of the measured characteristic dimension.

9. The method as claimed in any one of Claims 1 to 8, in which:

   - if it is determined that the couple comprising the average $\mu_m$ and the standard deviation $\sigma_m$ of the measured characteristic dimension belongs to the overall validation set, the manufacturing conditions of the parts are not modified;
   - if it is determined that the couple comprising the average $\mu_m$ and the standard deviation $\sigma_m$ of the measured characteristic dimension belongs to the overall sanction set, the manufacturing of the parts is discontinued; and
   - if it is determined that the couple comprising the average $\mu_m$ and the standard deviation $\sigma_m$ of the measured characteristic dimension belongs to the overall control set, the manufacturing conditions of the parts are adjusted by adjusting the regulating parameters of the manufacturing device.

FIG. 1

FIG. 2

EP 3 227 755 B1

## FIG. 3

$C^{mesuré}(\mu,\sigma) > C^{cible}$

$C^{mesuré}(\mu,\sigma) = C^{cible}$

$C^{mesuré}(\mu,\sigma) < C^{cible}$

## FIG. 4

$V_{C1}$  $O_{C1}$  $R_{C1}$

## FIG. 5

## FIG. 6

FIG. 7

**FIG. 8**

Fig. 9

**EP 3 227 755 B1**

## RÉFÉRENCES CITÉES DANS LA DESCRIPTION

### Documents brevets cités dans la description

- US 5655110 A1